# EUROPEAN PATENT SPECIFICATION

(11) **EP 4 189 371 B1**
(45) Date of publication and mention of the grant of the patent: **21.10.2026**
(21) Application number: 21762145.7
(22) Date of filing: 30.07.2021
(51) Int. Cl.: G01N 21/954, F27D 21/02, G02B 23/24, G03B 17/56, H04N 23/23, H04N 23/50, H04N 23/51, H04N 23/55, H04N 7/18, G01N 25/72, G03B 37/04

(54) **INSPECTION APPARATUS FOR MELTING FURNACES THAT CAN BE USED IN THE STEEL INDUSTRY AND METHOD**
INSPEKTIONSGERÄT FÜR SCHMELZÖFEN DAS IN DER STAHLINDUSTRIE EINGESETZT WERDEN KANN UND VERFAHREN
APPAREIL DE CONTRÔLE POUR FOURS DE FUSION UTILISABLE DANS LA SIDÉRURGIE ET PROCÉDÉ

(30) Priority: 30.07.2020 IT 202000018511
(43) Date of publication of application: 07.06.2023
(73) Proprietor: Danieli Automation S.P.A., 33042 Buttrio (IT)
(72) Inventor: POLO, Andrea, 33048 SAN GIOVANNI AL NATISONE (IT); VILLAGROSSI, Enrico, 46044 GOITO (IT); MONGIAT, Simone, 33100 UDINE (IT)
(74) Representative: Petraz, Gilberto Luigi
(86) International application number: PCT/IT2021/050236
(87) International publication number: WO 2022/024160

(56) References cited:
- WO-A1-2007/056855
- WO-A1-99/63383
- BR-A2- 102018 072 966
- CN-U- 208 841 421
- JP-A- S61 155 940
- KR-A- 20160 037 266
- US-A- 4 131 914
- US-A- 5 956 077
- US-A1- 2005 073 673
- US-A1- 2014 072 012
- US-A1- 2014 182 373

## Description

### FIELD OF THE INVENTION

The present invention concerns an inspection apparatus for melting furnaces that can be used in the steel industry.

The inspection apparatus according to the present invention is configured to acquire images and/or videos in environments where an operator cannot have direct access in safe conditions.

Preferably, but not restrictively, the inspection apparatus can be applied in the steel industry for the production of steel or other metals, or in the production of glass materials, for example in electric arc furnaces, ladles, submerged arc furnaces, melting or refining furnaces, induction melting furnaces or induction heating furnaces or suchlike.

The invention also concerns an inspection method for melting furnaces that can be used in the steel industry which uses said inspection apparatus.

### BACKGROUND OF THE INVENTION

Hostile environments are known, in which the direct presence of man is not allowed and not possible. Examples are environments that have extreme temperature conditions, such as extremely high or cryogenic temperatures, but also environments with a high concentration of corrosive gases, or with a potentially explosive atmosphere, or simply unknown environments that are difficult to access.

Examples of these environments can be furnaces for working metals, freezing apparatuses, nuclear plants, plants for the production of aggressive chemical substances and suchlike.

Often, or periodically, there is a need to inspect these environments, for example to assess the need for maintenance, the status of a production process, the need to secure the environment before access by an operator and so on. Another example may be the need to assess the presence of people in difficulty, as in the case where the hostile environment is a site where a fire is under way and the need to intervene to save human lives must be assessed.

Apparatuses for the acquisition of images or videos are therefore known, for example by means of video cameras, thermal cameras, X-ray systems, for example installed on an inspection head that can be moved by means of appropriate drive and control systems.

Usually, known apparatuses allow to frame more than one part of the environment, if not a complete 360-degree panoramic view.

One disadvantage of the apparatuses known to the state of the art is that, in order to obtain an extended or panoramic view of the environment, it is necessary to install on the head a plurality of image detection devices of the same type, each oriented with respect to the others at a suitable angle, to acquire a plurality of images as obtained by each of said devices, and subsequently process them to obtain a complete image.

An example of such solutions is described in the Italian patent ITUB2015A009279 which provides a plurality of video cameras that each acquire a corresponding optical image from the totality of which an optical panoramic view of the environment is obtained.

However, because of the criticality due to the environmental conditions, the devices installed on said apparatuses are very burdensome from a technological and also an economic point of view. For example, they must be able to withstand extreme temperatures and/or corrosion from possible chemical agents.

Furthermore, in order to obtain continuous scans it is necessary to use a large number of devices, unless it is possible to accept discontinuities, or lack of images, in the sectors that are not covered by any device.

One disadvantage is also the need to integrate images coming from different devices, each with its own technical characteristics and orientation in space. The computational effort of processing the images can therefore be high.

Document US 2014/0072012 A1 describes an inspection system suitable for the inspection of pipes, in particular sewerage pipes, provided with a slider to move an inspection head inside said pipes. The system comprises a temperature measuring device, which can be an infrared sensor, not expressly used to acquire thermal images. The inspection head, comprising the thermal and optical sensors, is positioned so as to rotate around an axis longitudinal to the body of the system.

Document CN 208 841 421 U describes a robot for the automatic inspection of the nozzle of a blast furnace, comprising a body moved by four wheels. On the front side of the upper surface of the body, an inspection head is positioned which has a video camera on the left side and an infrared camera on the right side.

Document US 4 131 914 A describes a system suitable to inspect a coke oven, provided with a head, which comprises a video camera, positioned at the end of a piston on the longitudinal axis of said piston. The head can be rotated around the longitudinal axis and moved vertically by moving the piston.

Document US 2014/0182373 A1 describes a probe to inspect dangerous or submarine environments, not expressly suitable for applications where there may be high temperatures. On the terminal part of the probe a support is fixed to which a video camera is constrained. The support is positioned in line with a longitudinal axis at least of the terminal part of the probe, and can rotate around the longitudinal axis. Furthermore, the video camera can modify its inclination with respect to the support around the axis of constraint.

Document US 2005/0073673 A1 describes an inspection system of hot gas components for a turbine. The inspection head, comprising one or more image detection devices, is positioned on a support that rotates around the longitudinal axis of the arm of a robot that supports and moves the inspection head. The support, which therefore lies on a plane orthogonal to the longitudinal axis, can also be inclined with respect to said plane.

Document WO 99/63383 A1 describes a system to inspect chambers for industrial processes, such as boilers, combustion chambers, chemical process chambers and suchlike. The inspection head, comprising one or more image detection devices, is positioned on a lance. At least one terminal part of the lance can rotate around its longitudinal axis, moving the inspection head in rotation. The inspection head can also be inclined with respect to the plane orthogonal to the longitudinal axis.

There is therefore a need to perfect an inspection apparatus which can overcome at least one of the disadvantages of the state of the art.

In particular, one purpose of the present invention is to provide an inspection apparatus which can be used in hostile and/or dangerous environments in conditions of substantial safety with respect to damage and malfunctions, in particular for melting furnaces that can be used in the steel industry.

Another purpose of the present invention is to provide an inspection apparatus which allows to carry out continuous scans of the environment, without blind spots in the acquisition.

Another purpose is to reduce the economic burden required for image detection devices or, given the same economic burden, to increase the technological performance of the inspection apparatus.

It is also a purpose to perfect an inspection method using said inspection apparatus.

The Applicant has devised, tested and embodied the present invention to overcome the shortcomings of the state of the art and to obtain these and other purposes and advantages.

### SUMMARY OF THE INVENTION

The present invention is set forth and characterized in the independent claims. The dependent claims describe embodiments of the present invention.

In accordance with the above purposes, embodiments described here concern an inspection apparatus for melting furnaces that can be used in the steel industry, amongst other features defined in claim 1, comprising an inspection head and a positioning support to support the inspection head.

The positioning support as above is suitable for the insertion of the inspection head into the melting furnace, through an inlet aperture of the melting furnace.

The inspection head comprises at least one image detection device. The image detection devices can be cameras, video cameras, thermal imaging cameras or other similar or comparable elements. In one solution of the invention, the inspection head comprises both a camera, or video camera, and also a thermal imaging camera, in order to obtain both optical images as well as thermal images of the environment being analyzed.

The inspection head can also comprise, in addition or as an alternative to those indicated above, other image detection devices such as, for example, laser scanners or radars.

The claimed inspection apparatus also comprises at least one temperature sensor and a data processing system able to acquire data from said at least one temperature sensor, in order to activate procedures for the protection of the inspection head.

The inspection head can also comprise a temperature sensor. In this way, it is possible to detect a possible situation of risk caused by an excess of heat that can damage the image detection devices and/or other devices and/or sensors and/or electronic, mechanical, pneumatic and/or similar elements, and command the withdrawal of the head from the hostile environment.

The inspection head comprises a platform and a body.

The platform can be able to support the one or more image detection devices and the possible temperature sensor.

In one aspect of the invention, the platform is mobile, being able to rotate with respect to the body. In particular, the platform can have a rotating table and an edge.

The rotating table as above can be positioned on a substantially horizontal plane, at least when it is in an operating condition inside the melting furnace.

Advantageously, the positioning of the rotating table on a horizontal plane allows to position the image detection devices so as to detect images of the lateral walls and of a lateral part of the upper wall, or ceiling.

The central part of the upper wall can usually be open, or the electrodes can be raised during the working steps during which the inspection can be carried out, for example the refining step. Therefore, there is generally no need to detect images of the entire central part of the upper wall.

The one or more image detection devices can have a viewing aperture on the horizontal plane as above comprised between 30° and 95°, preferably 60°. They can also have a viewing aperture on a vertical plane comprised between 30° and 95°, preferably 60°.

Advantageously, the size, in bits, of the image files can therefore be small, simplifying the operations for saving and/or transmitting the images and the complexity of the electronic components used.

Preferably, the rotating table can rotate with respect to an axis thereof at least up to an angle of 360°. The 360° rotation can be continuous in the same sense, or it can provide reversals of direction.

In particular, the axis as above can be a substantially vertical axis. The inclination of such axis with respect to the vertical can be less than or equal to 0.5°, for reasons related for example to mechanical clearances or weight of the system.

Advantageously, the image detection devices can therefore scan at least up to 360° of the surrounding environment. In particular, it is also possible to carry out continuous scans of the surrounding environment.

According to some embodiments, the inspection head comprises only one device of each type, for example, a single optical or thermal image acquisition device, or a single optical image acquisition device and a single thermal image acquisition device, or a single optical image acquisition device and a single thermal image acquisition device and a single radar, or other combination of devices.

One advantage, in fact, is that it is not necessary to use several devices of the same type, for example it is not necessary to use multiple video cameras or multiple thermal imaging cameras, to obtain all the desired images.

The body is constrained to the positioning support and in turn supports the platform.

The body is able to contain the electronic and/or mechanical and/or pneumatic and/or similar elements for the functioning and movement of the platform and the devices comprised therein.

Advantageously, the body can be configured to protect the electronic and/or mechanical and/or pneumatic and/or similar elements as above from hostile elements present in the surrounding environment.

Advantageously, the inspection head, and possibly at least the part of the positioning support able to be inserted in the hostile environment, are insulated, so as to protect their contents from a possible hostile temperature in the environment.

The inspection head also comprises a heating or cooling system, with air or water, for regulating the temperature around the inspection head. It is therefore an advantage that, by means of, for example, compressed air, it is possible to control the local temperature.

### ILLUSTRATION OF THE DRAWINGS

These and other aspects, characteristics and advantages of the present invention will become apparent from the following description of some embodiments, given as a non-restrictive example with reference to the attached drawings wherein:
- fig. 1 is a perspective view of an inspection apparatus, during use, according to some embodiments described here;
- fig. 1a is a perspective view of a detail of the inspection apparatus of fig. 1;
- fig. 2 is a schematic view of the inspection apparatus of fig. 1, according to some embodiments described here;
- fig. 3 is a perspective view of the lower part of the inspection head of the inspection apparatus of fig. 1;
- figs. 3a and 3b are schematic representations of the disposition of image detection devices of the inspection head of fig. 3;
- fig. 4 is a perspective view of the upper part of the inspection head of the inspection apparatus of fig. 1;
- fig. 5 is a section view of the body of fig. 4, according to plane V-V.

To facilitate comprehension, the same reference numbers have been used, where possible, to identify identical common elements in the drawings. It is understood that, within the scope defined by the appended claims, elements and characteristics of one embodiment can conveniently be combined or incorporated into other embodiments without further clarifications.

### DESCRIPTION OF SOME EMBODIMENTS

We will now refer in detail to the possible embodiments of the invention, of which one or more examples are shown in the attached drawings, by way of a non-limiting illustration. The phraseology and terminology used here is also for the purposes of providing non-limiting examples. The scope of the present invention is solely defined and limited by the appended claims.

Embodiments described here, using the attached drawings, concern an inspection apparatus 10 for melting furnaces that can be used in the steel industry as claimed, hereafter simply apparatus, for hostile and/or dangerous environments 100, used for example to assess the need to carry out maintenance interventions, the status of a production process, the presence of human beings under duress, the need to secure the environment 100 before an operator accesses it and so on.

Some environments 100 can have conditions of extreme temperatures, such as high or cryogenic temperatures, but also high concentrations of corrosive gases, or with a potentially explosive atmosphere, or they are simply unknown environments, difficult to access and in which dangerous conditions could exist.

Some of such environments 100 can be melting furnaces for metal processing plants, freezing apparatuses, nuclear plants, plants for producing aggressive chemical substances and suchlike. In particular, the inspection apparatus 10 in accordance with the present invention is particularly suitable to inspect melting furnaces 100a that can be used in the steel industry.

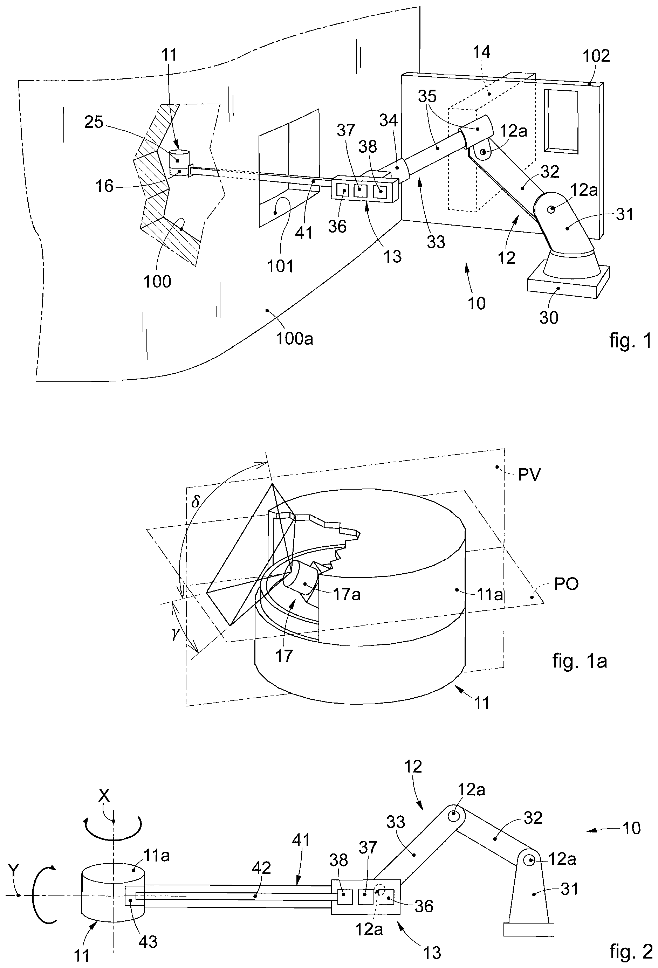

According to the embodiments of fig. 1, the apparatus 10 can comprise an inspection head 11 and a corresponding positioning support 12.

The apparatus 10 can also comprise a processing unit 13.

The apparatus 10 can also comprise an electrical control panel 14.

According to some embodiments, the processing unit 13 can comprise an image processing system 36 and/or a data processing system 37.

The processing unit 13 can also comprise a movement control unit 38.

According to some embodiments, the electrical control panel 14 can contain elements for the power supply of the apparatus 10, connected for example to an electricity grid.

According to one variant not shown, the electrical control panel 14 can contain both the elements for the power supply of the apparatus 10 as well as the processing unit 13 as above.

According to another variant not shown, the electrical control panel 14 can contain both the elements for the power supply of the apparatus 10 as well as the movement control unit 38.

According to the invention as claimed, the apparatus 10 also comprises a gas or liquid protection system, with air or water, not shown in the drawings.
Such protection system is a system for regulating the temperature around the inspection head 11, for example a heating or cooling system. Such protection system can also be a system for removing corrosive gases, for example thus preventing a high concentration of corrosive gases, or suchlike, around the inspection head 11.

Preferably, but not exclusively, such protection system is a compressed air cooling system.

The inspection head 11 comprises a platform 15 and a body 16.

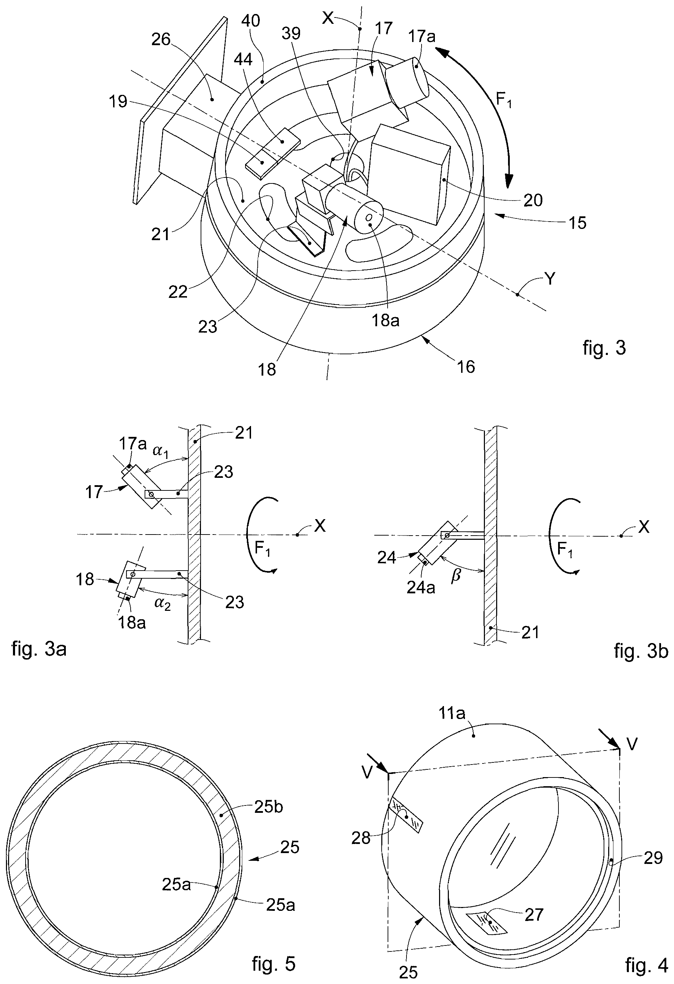

As shown in fig. 3, the platform 15 can be positioned on the body 16.

The platform 15 comprises one or more image detection devices 17, 18, 24, hereafter referred to as devices 17, 18, 24.

According to the claimed invention, the one or more devices 17, 18, 24 are able to rotate around an axis X of the platform 15. For example, the axis X is an axis central with respect to the inspection head 11.

The axis X can be a substantially vertical axis. In particular, the inclination of the axis X with respect to the vertical is advantageously less than or equal to 0.5°. In general, in other embodiments, the invention can also be applied in situations in which the axis X varies from -35° to +35° with respect to the vertical.

As another example not shown in the drawings, the axis X can be an axis orthogonal to the platform 15, positioned centrally with respect to the platform 15 and not centrally with respect to the inspection head 11. For example, according to one variant not shown, the platform 15 is constrained to the body 16 in a position that is not centered or not in axis.

The one or more devices 17 can be able to acquire optical images, such as one or more sequences of frames or films; for example, they can be cameras, telephoto cameras, video cameras or suchlike.

The one or more devices 18 can be thermal imaging cameras, able to acquire thermal images or footage.

The one or more devices 24 can also integrate both optical and also thermal technologies within a single device, for example providing at output also optical and thermal images combined with each other.

As a preferential but not exhaustive example, the inspection head 11 can comprise a single optical image detection device 17 and a single thermal image acquisition device 18, and not comprise other devices.

According to another preferential but not exhaustive example, the inspection head 11 can comprise a single optical image detection device 17 and not comprise thermal image detection devices 18, 24.

According to another non-exhaustive example, the inspection head 11 can comprise a single optical and thermal image detection device 24 and not comprise other optical 17 and/or thermal 18 image detection devices.

The one or more devices 17, 18, 24 can have a respective inclination α1, α2, β with respect to the platform 15. The angles of inclination α1, α2, β can be the same or different from each other, as in the example case of fig. 3a, in which there are several devices 17, 18. Fig. 3b shows by way of example the case in which there is a single device 24 positioned in correspondence with the axis X.

The angles of inclination α1, α2, β can take on values comprised between 0° and 90°, preferably comprised between or equal to 1° and 60°, even more preferably comprised between or equal to 1° and 45°.

The angles of inclination α1, α2, β can be changed, for example by means of an automated movement carried out by means of movement means commanded by the control unit 38, such as one or more electric motors, one or more pneumatic motors or suchlike.

The inspection apparatus 10 in accordance with the claimed invention comprises at least one temperature sensor 19 and a data processing system 37 able to acquire data from said at least one temperature sensor 19, in order to activate procedures for the protection of the inspection head 11.

The platform 15 can also comprise one or more sensors 19, such as temperature sensors, sensors for detecting chemical substances, or proximity or distance sensors, or suchlike, or an angular position sensor 44. Preferably, the platform 15 can comprise at least one temperature sensor 19.

According to some embodiments, the platform 15 can comprise means for data transmission via cable and/or wireless, not shown in the drawings, to transmit the data sent by the devices 17, 18, 24 and/or by the sensors 19, 44 to the processing unit 13. The data transmission means can be for example wired systems, with or without shielded cables, or Wi-Fi^{™}, Bluetooth^{®} or similar communication means.

The platform 15 can comprise one or more connection devices 20 for managing the connection in the wired systems, such as for example converters between USB, Ethernet, RS-485 formats and suchlike, hubs, routers or suchlike.

According to one variant not shown, the platform 15 can comprise one or more data acquisition devices, to acquire, process, locally save and/or transmit the data sent by the devices 17, 18, 24 and/or by the sensors 19, 44.

The platform 15 can have a rotating table 21 and an edge 40.

According to some embodiments, the rotating table 21 and the edge 40 are made in a single body and rotate integrally.

According to one variant not shown, the edge 40 is integral with the body 16 and the rotating table 21 rotates with respect to the edge 40.

The rotating table 21 can be positioned on a substantially horizontal plane PO, at least when it is in an operating condition inside the melting furnace.

The one or more devices 17, 18, 24 and/or sensors 19, 44 and/or connection devices 20 and/or data acquisition devices can be attached in an integral manner in correspondence with the rotating table 21. In particular, the one or more image detection devices 17, 18, 24 can be positioned on the rotating table 21 so as to have their optics 17a, 18a, 24a in correspondence with a lateral wall 11a of the inspection head 11.

The one or more image detection devices 17, 18, 24 can have a viewing aperture δ on a vertical plane PV comprised between 30° and 95°, preferably between 55° and 65°, even more preferably of about 60°.

The one or more image detection devices 17, 18, 24 can have a viewing aperture γ on a horizontal plane PO comprised between 30° and 95°, preferably between 55° and 65°, even more preferably of substantially 60°.

The viewing apertures δ and γ can be the same or different from each other.

According to some embodiments, the measurement of the angular position by means of the sensor 44 can allow to associate the angular position of the rotating table 21 with one or more acquired images. Advantageously, in this way it is possible to localize the image acquired with respect to the environment 100 inspected.

According to some embodiments, the one or more devices 17, 18, 24 and/or sensors 19, 44 and/or connection devices 20 and/or acquisition devices can be constrained to the rotating table 21 by means of attachment elements 23, such as brackets, screws, glue and suchlike.

The platform 15 can also comprise means for moving the rotating table 21, not shown in the drawings.

The movement means can be one or more electric motors, one or more pneumatic motors or suchlike.

The platform 15 can also comprise other electronic and/or mechanical and/or pneumatic and/or oleodynamic elements for the functioning and movement of the platform 15 and/or of the one or more devices 17, 18, 24 and/or sensors 19, 44 and/or connection devices 20 and/or data acquisition devices positioned thereon, such as, as a non-limiting example, electronic data conditioning circuits, motor control and regulation systems, motors, power supply systems, pipes and/or pipelines and suchlike.

According to the claimed invention, the rotating table 21 is able to be constrained, on the body 16, in a manner that is moveable by rotation around the axis X of the platform 15 or equivalently the axis X of the rotating table 21.

According to the variant as above, not shown, the rotating table 21 is constrained to the edge 40, in a manner that is moveable by rotation around an axis X which is not central with respect to the body 16.

According to some embodiments, the one or more devices 17, 18, 24 attached on the rotating table 21 of the platform 15 rotate integrally with the platform 15 with respect to the axis X.

The rotating table 21 can be able to rotate around the axis X in one sense of rotation, or in both senses of rotation, as indicated by the arrow F1 in fig. 3.

The rotation that the rotating table 21 can perform can be smaller than a round angle of 360°, or equal to or greater than 360°. Preferably, the rotation is at least equal to or greater than 360°, in order to allow the one or more devices 17, 18, 24 to frame a 360° panoramic strip of the environment 100.

The rotation can be continuous or intermittent.

Advantageously, the rotation speed of the rotating table 21 is such as to allow to complete the image acquisition in an amount of time sufficiently short to not damage the inspection head 11 exposed to the hostile environment 100.

The framed strip of the environment 100 can be more or less expansive in height, depending on the typical parameters of the devices 17, 18, 24, such as for example the angle of view, the distance from the framed element and suchlike.

According to some embodiments, the apparatus 10 can be able to detect multiple strips of the environment 100.

In one variant, the apparatus 10 can be suitable to perform a "spherical" scan of the environment 100, by means of a rotation of the inspection head 11, or the rotating table 21, around an axis Y perpendicular to the axis X.

According to some variants, the apparatus 10 can be able to detect several strips of the environment 100 by moving the inspection head 11 in height by means of the positioning support 12. According to some variants, not shown in the drawings, the apparatus 10 can be able to detect several strips of the environment 100, by varying the angle of inclination α1, α2, β of the devices 17, 18, 24 with respect to the platform 15 at the end of the scanning of each strip, for example by means of the automated movement of the inclination of the devices 17, 18, 24 carried out by the movement means.

According to some embodiments, the rotating table 21 can have one or more slots 22 able to allow the assembly of the one or more devices 17, 18, 24 and/or sensors 19, 44 and/or connection devices 20 and/or data acquisition devices, even in differentiated positions.

The one or more slots 22 can also be able to allow air to escape from inside the inspection head 11.

According to some embodiments, the rotating table 21 can also have a central hole 39, able to allow the passage of the electric cables of the one or more devices 17, 18, 24 and/or sensors 19, 44 and/or connection devices 20 and/or data acquisition devices toward the inside of the inspection head 11.

According to some embodiments, the body 16 is integrally attached to the positioning support 12. The attachment to the positioning support 12 can be achieved by means of a flange 26.

According to one variant, the body 16 can contain, also with a protective function, the motors and/or electronic and/or mechanical and/or pneumatic and/or oleodynamic elements for the functioning and movement of the platform 15.

The body 16 can also contain one or more of the devices 17, 18, 24 and/or sensors 19, 44 and/or connection devices 20 and/or data acquisition devices positioned thereon, such as, as a non-exhaustive example, electronic data conditioning circuits, motor control and regulation systems, motors, power supply systems, pipes and/or pipelines, and suchlike, not shown in the drawings.

According to some embodiments, the inspection head 11 can have an external upper cover 25.

As shown in fig. 5, the external upper cover 25 can be insulated, in particular it can have three or more layers, for example two external layers 25a of metallic material and an internal layer 25b of insulating material.

According to some embodiments, the rotating table 21 and/or the body 16 can also be of the insulating type, for example in a similar way to the upper cover 25, in order to prevent, for example, damage to the electronic and/or mechanical and/or pneumatic and/or oleodynamic elements contained inside the inspection head 11.

According to fig. 4, the upper cover 25 can have apertures 27, 28 that allow the image detection devices 17, 18, 24 to view the outside and acquire images from the environment 100 to be inspected.

In particular, the optics 17a, 18a, 24a of the one or more image detection devices 17, 18, 24 can be positioned in correspondence with the apertures 27, 28 of the lateral wall 11a of the inspection head 11.

The apertures 27, 28 can be equipped with surfaces transparent to the wavelengths of the electromagnetic radiations that the image detection devices 17, 18, 24 can acquire. For example, the apertures 27, 28 can be sheets of glass transparent to visible radiation, in the case of video cameras. Also, they can be surfaces transparent to infrared radiation, in the case of thermal imaging cameras.

According to some embodiments, the upper cover 25 can comprise means 29 for assisting the positioning on the body 16 and/or on the platform 15. For example, such positioning assisting means 29 can be a groove 29, a thread or suchlike, able to cooperate with corresponding coupling elements of the platform 15.

According to the invention, the positioning support 12 is suitable for the insertion of the inspection head 11 into the melting furnace 100a.

In particular, the insertion preferably occurs through an aperture 101 of the melting furnace 100a. The aperture 101 can preferably be the slagging door, generally present in melting furnaces.

According to some embodiments, the positioning support 12 can be able to support and move the inspection head 11.

In particular, the positioning support 12 can be able to allow the inspection head 11 to be moved according to linear movements, forward and backward, in one, several or all directions.

According to some embodiments not shown in the drawings, the positioning support 12 can for example be a telescopic guide able to make the inspection head 11 advance inside the environment 100.

For example, it can guide the inspection head 11 through an inlet 101, or mouth, of the environment 100, for example the mouth of a furnace.

In particular, the positioning support 12 can be able to allow the inspection head 11 to be moved also according to rotary movements, around one or more points and/or around one or more axes.

According to some embodiments and as shown in figs. 1, 2, the positioning support 12 can be a manipulator or a horizontally pivoting member, with two or more movement elements. In particular, the positioning support 12 used in an apparatus in accordance with the claimed invention is a robotic articulated arm.

Advantageously, it is possible to use the same robotic articulated arm used to move other devices of a known type, for example lances, sampling devices or suchlike, which can assemble and disassemble each of these devices according to the operations to be performed.

The positioning support 12 can have one or more articulation points 12a, preferably two articulation points 12a, possibly three or several articulation points 12a.

For example, the positioning support 12 can comprise a support base 30 and/or one or more rotation members 31 for rotation on a horizontal or vertical plane and/or one or more hinged elements 32 and/or one or more arms 33 and/or a rod 41 and/or joints 34. The one or more arms 33 and the rod 41 can be telescopic or fixed.

For example, a telescopic arm 33 can comprise elements 35 that are coaxial with respect to each other, with a diameter slightly different from each other so as to allow one element 35 to retract into a second element 35.

As shown in fig. 2, the rod 41 can have an internal shaft 42, able to cooperate with a gear 43 comprised in the inspection head 11 in order to allow the rotation of the inspection head 11 around the axis Y.

In an alternative variant, the gear 43 can be connected only to the rotating table 21 to make it rotate around the axis Y independently of the inspection head 11.

In a preferential embodiment, the axis Y can be in axis with the rod 41.

In a variant not shown, the axis Y can be perpendicular to the axis of the rod 41.

The shaft 42 can be able to be moved by the movement control unit 38, by means of one or more electric, pneumatic or similar devices or motors.

According to some embodiments, the positioning support 12 can be internally hollow, at least in a part thereof, in order to allow the passage of the conduits and/or the signal and/or power supply cables between the inspection head 11 and the processing unit 13 and/or the control panel 14.

According to some embodiments, the positioning support 12 can have, at least in a part thereof, an insulated external surface, for example in a similar manner to the upper cover 25, for example to prevent a cooling fluid passing through the conduits from heating.

According to some embodiments, the processing unit 13 can be positioned as close as possible to the inspection head 11, as shown in fig. 1, or inside the inspection head 11, for example to reduce the loss of signals caused by ambient electromagnetic noise.

According to some variants, the processing unit 13 can be positioned in the proximity of, or be comprised in, the control panel 14 or in any suitable position whatsoever, for example in a position protected from the hostile elements.

For example, the processing unit 13 can be positioned beyond a protective wall 102.

The image processing system 36 comprised in the processing unit 13 can be able, in a known manner, to process images, such as frames and/or videos. For example, it can process optical and thermal images in order to reconstruct images superimposed with both types of information. As another example, it can reconstruct panoramic images.

The data processing system 37 can be able to acquire data from the sensors 19, 44, to activate procedures for protecting the inspection head 11 from hostile elements in the environment 100 and/or for processing and saving such data, for example for use by technologists.

As a non-exhaustive example, the protection procedures can comprise the withdrawal of the inspection head 11, caused for example by an excess of temperature indicated by a temperature sensor 19, or the repositioning of the inspection head 11 in the event of a probable collision with elements such as walls, ceilings, or obstacles in general, for example detected by means of a proximity sensor 19.

According to some embodiments, the processing unit 13 can, by means of the image processing system 36 and data processing system 37, process data and images in order to identify anomalies, such as cracks, deposits, hot and/or cold spots or suchlike.

The processing unit 13 can therefore comprise one or more processing algorithms, able for example to implement predefined decision rules or to implement programs based on artificial intelligence techniques, such as Deep Neural Networks (DNN) suitably trained to detect one or more anomalies, or similar programs.

According to some embodiments, the processing unit 13 can be connected to at least one display device, not shown in the drawings, for example a pulpit or suchlike, able to allow operators to view in real time the images and data acquired by the devices 17, 18, 24 and/or by the sensors 19, 44.

The processing unit 13 can communicate any anomalies identified to the operator, for example by means of the display device, during the inspection of the environment 100.

According to some embodiments, the processing unit 13 can comprise an internal database, for storing images, videos and/or the results of the image and data processing, for example of the possible anomalies. In an alternative variant, the processing unit 13 can be connected to one or more external databases.

The processing unit 13 can be connected to the control panel 14 for the automated control of the movement of the apparatus 10.

For example, the data processing system 37 can send such data to the control panel 14, in order to activate the procedures for protecting the inspection head 11.

Some embodiments described here also concern an inspection method for hostile and/or dangerous environments 100, in particular an environment 100 of a melting furnace 110a that can be used in the steel industry as defined in appended claim 10, by means of an inspection apparatus 10 according to the present invention.

According to some embodiments, the inspection method can provide, during use:
- the insertion of an inspection head 11 into a melting furnace 100a through an inlet 101 of the melting furnace 100a, by means of a positioning support 12;
- the acquisition of optical and/or thermal images of a strip of the environment 100 of the melting furnace 100a which can be framed by one or more optical and/or thermal image detection devices 17, 18, 24, by means of the rotation of a rotating table 21 of a platform 15 of the inspection head 11, by an angle of rotation smaller than a round angle of 360°, or equal to or greater than 360°, around an axis X of the platform 15;
- the possible movement of the inspection head 11 to record images of a different strip of the environment 100.
- the processing of the images, by means of a processing unit 13.

The inspection method can provide that the insertion, and therefore the acquisition of the images, are carried out after the slagging step or even better after the tapping step of the molten metal and before the resumption of the subsequent melting.

The inspection method can provide that the inspection head 11, at least when inserted into a hot environment such as the inside of the melting furnace, is extracted from the furnace 100a within one minute of its insertion, preferably 30 seconds, even more preferably 10 seconds.

Advantageously, in this way the inspection head 11 is prevented from being exposed for an excessively long period of time to the heat of the hostile environment 100 of the melting furnace 100a.

According to some embodiments, the movement of the inspection head 11 can provide to rotate the inspection head 11 around an axis Y orthogonal to the axis X.

According to alternative embodiments, the movement of the inspection head 11 can provide to rotate only the rotating table 21 around an axis Y orthogonal to the axis X, independently of the inspection head 11.

According to other alternative embodiments, the movement of the inspection head 11 can provide to vary the respective inclinations α1, α2, β of the devices 17, 18, 24 with respect to the platform 15.

In this way, as mentioned, it is possible to perform a "spherical" scan of the environment 100.

According to some embodiments, the movement of the inspection head 11 can provide to vary the position of the inspection head 11 in height.

According to some embodiments, the inspection method can provide an initial adjustment of the positioning of the one or more devices 17, 18, 24 on the rotating table 21.

According to some embodiments, the inspection method can also provide to detect positioning adjustment parameters, for subsequent image processing. In fact, by knowing the reciprocal position of the devices 17, 18, 24 and their angular position with respect to the rotating table 21, it can be possible to reconstruct a panoramic shot of the environment also by means of combinations of images coming from different devices 17, 18, 24, for example by superimposing thermal and optical images.

According to some embodiments, the method can provide to measure the angular position of the rotating table 21 by means of an angular position sensor 44, for example an inertial sensor, an encoder or suchlike.

It is clear that modifications and/or additions of parts or steps may be made to the inspection apparatus 10 and to the inspection method as described heretofore, without departing from the field and scope of the present invention as defined by the claims.

In the following claims, the sole purpose of the references in brackets is to facilitate reading: they must not be considered as restrictive factors with regard to the field of protection claimed in the specific claims.

## Claims

1. Inspection apparatus (10) for melting furnaces (100a) that can be used in the steel industry, comprising an inspection head (11) and a positioning support (12), said inspection head (11) comprising a rotating table (21), wherein said inspection head (11) comprises one or more image detection devices (17, 18, 24) attached on said rotating table (21) and which are arranged to rotate in a manner integral with it, wherein said positioning support (12) is suitable for the insertion of the inspection head (11) into said melting furnace (100a) through an inlet aperture (101) of the melting furnace (100a), wherein said positioning support (12) is a robotic articulated arm and wherein said inspection head (11) comprises a platform (15) having the rotating table (21) and wherein said inspection head (11) further comprises a body (16), wherein said body (16) is constrained to the positioning support (12) and in turn supports the platform (15), wherein said one or more image detection devices (17, 18, 24) are rotatable around an axis (X) of the platform (15) or equivalently the axis (X) of the rotating table (21), wherein the apparatus comprises at least one temperature sensor (19) and a data processing system (37) able to acquire data from said at least one temperature sensor (19), in order to activate procedures for the protection of the inspection head (11), and wherein the apparatus further comprises a heating or cooling system, with air or water, for regulating the temperature around the inspection head (11).

2. Inspection apparatus as in claim 1, wherein said one or more image detection devices (17, 18, 24) have an inclination with respect to the platform (15).

3. Inspection apparatus (10) as in any claim hereinbefore, wherein said one or more image detection devices (17, 18, 24) are positioned on said rotating table (21) so as to have their optics (17a, 18a, 24a) in correspondence with a lateral wall (11a) of the inspection head (11).

4. Inspection apparatus (10) as in any claim hereinbefore, wherein said one or more image detection devices (17, 18, 24) have a viewing aperture (δ) on a vertical plane (PV) comprised between 30° and 95°, preferably 60°.

5. Inspection apparatus (10) as in any claim hereinbefore, wherein said one or more image detection devices (17, 18, 24) have a viewing aperture (y) on a horizontal plane (PO) comprised between 30° and 95°, preferably 60°.

6. Inspection apparatus (10) as in any claim hereinbefore, wherein said one or more image detection devices (17, 18, 24) are selected from optical and/or thermal image detection devices and/or devices that detect both optical and also thermal images.

7. Inspection apparatus (10) as in any claim hereinbefore, wherein said axis (X) is a substantially vertical axis, with an inclination of said axis (X) with respect to the vertical smaller than or equal to 0.5°.

8. Inspection apparatus (10) as in any claim hereinbefore, wherein an inclination of said axis (X) varies from -35° to +35°.

9. Inspection apparatus (10) as in any claim hereinbefore, wherein said rotating table (21) comprises a sensor (44) for measuring the angular position, able to associate the angular position of said rotating table (21) with one or more acquired images.

10. Inspection method for melting furnaces (100a) that can be used in the steel industry, by means of an inspection apparatus (10) as in claims from 1 to 9, comprising the steps of:
- inserting an inspection head (11) into a melting furnace (100a) through an inlet aperture (101) of the melting furnace (100a), by means of a positioning support (12);
- acquiring optical and/or thermal images of a strip of the environment (100) of the melting furnace (100a) which can be framed by one or more image detection devices (17, 18, 24), by means of the rotation of a rotating table (21) comprising said one or more image detection devices (17, 18, 24), around an axis (X) of said rotating table (21);
- processing the images acquired, by means of a processing unit (13), in which the inspection head (11) is extracted from the melting furnace (100a) within a minute of it being inserted in a hot environment such as the inside of the melting furnace (100a).

11. Inspection method as in claim 10, wherein it provides that the insertion of the inspection head (11) is carried out after the step of tapping the molten metal.

12. Inspection method as in any claim from 10 or 11, wherein it provides that, during said image acquisition, the inspection head (11) is kept stationary in height by the positioning support (12).

13. Inspection method as in claim 10, wherein it also provides to rotate the inspection head (11) around an axis (Y) orthogonal to said axis (X) in order to acquire images of a different strip of the environment (100).

14. Inspection method as in claim 10, wherein it also provides to rotate said rotating table (21) around an axis (Y) orthogonal to said axis (X), independently of the inspection head (11).

## Patentansprüche

1. Inspektionsvorrichtung (10) für Schmelzöfen (100a), die in der Stahlindustrie verwendet werden können, aufweisend einen Inspektionskopf (11) und einen Positionierungsträger (12), wobei der Inspektionskopf (11) einen Drehtisch (21) aufweist, wobei der Inspektionskopf (11) eine oder mehrere Bilderfassungsvorrichtungen (17, 18, 24) aufweist, die auf dem Drehtisch (21) angebracht sind und die angeordnet sind, um sich in einer damit integralen Weise zu drehen, wobei der Positionierungsträger (12) geeignet ist zum Einführen des Inspektionskopfs (11) in den Schmelzofen (100a) durch eine Einlassöffnung (101) des Schmelzofens (100a) hindurch, wobei der Positionierungsträger (12) ein Robotergelenkarm ist und wobei der Inspektionskopf (11) eine Plattform (15) aufweist, die den Drehtisch (21) aufweist, und wobei der Inspektionskopf (11) ferner einen Körper (16) aufweist, wobei der Körper (16) an dem Positionierungsträger (12) befestigt ist und seinerseits die Plattform (15) trägt, wobei die eine oder die mehreren Bilderfassungsvorrichtungen (17, 18, 24) um eine Achse (X) der Plattform (15) oder äquivalent die Achse (X) des Drehtischs (21) drehbar sind, wobei die Vorrichtung mindestens einen Temperatursensor (19) und ein Datenverarbeitungssystem (37) aufweist, das imstande ist, Daten von dem mindestens einen Temperatursensor (19) zu erfassen, um Prozesse zum Schutz des Inspektionskopfs (11) zu aktivieren, und wobei
die Vorrichtung ferner ein Heiz- oder Kühlsystem aufweist,
mit Luft oder Wasser, zum Regulieren der Temperatur um den Inspektionskopf (11) herum.

2. Inspektionsvorrichtung nach Anspruch 1, wobei die eine oder die mehreren Bilderfassungsvorrichtungen (17, 18, 24) eine Neigung in Bezug auf die Plattform (15) haben.

3. Inspektionsvorrichtung (10) nach irgendeinem vorhergehenden Anspruch, wobei die eine oder die mehreren Bilderfassungsvorrichtungen (17, 18, 24) auf dem Drehtisch (21) positioniert sind, um ihre Optik (17a, 18a, 24a) in Übereinstimmung mit einer Seitenwand (11a) des Inspektionskopfs (11) zu haben.

4. Inspektionsvorrichtung (10) nach irgendeinem vorhergehenden Anspruch, wobei die eine oder die mehreren Bilderfassungsvorrichtungen (17, 18, 24) eine Betrachtungsöffnung (δ) in einer vertikalen Ebene (PV) haben, die zwischen 30° und 95°, vorzugsweise 60°, liegt.

5. Inspektionsvorrichtung (10) nach irgendeinem vorhergehenden Anspruch, wobei die eine oder die mehreren Bilderfassungsvorrichtungen (17, 18, 24) eine Betrachtungsöffnung (γ) in einer horizontalen Ebene (PO) haben, die zwischen 30° und 95°, vorzugsweise 60°, liegt.

6. Inspektionsvorrichtung (10) nach irgendeinem vorhergehenden Anspruch, wobei die eine oder die mehreren Bilderfassungsvorrichtungen (17, 18, 24) ausgewählt sind aus optischen und/oder thermischen Bilderfassungsvorrichtungen und/oder Vorrichtungen, die sowohl optische als auch thermische Bilder erfassen.

7. Inspektionsvorrichtung (10) nach irgendeinem vorhergehenden Anspruch, wobei die Achse (X) eine im Wesentlichen vertikale Achse ist, wobei eine Neigung der Achse (X) in Bezug auf die Vertikale kleiner als oder gleich 0.5° ist.

8. Inspektionsvorrichtung (10) nach irgendeinem vorhergehenden Anspruch, wobei eine Neigung der Achse (X) von -35° bis +35° variiert.

9. Inspektionsvorrichtung (10) nach irgendeinem vorhergehenden Anspruch, wobei der Drehtisch (21) einen Sensor (44) zum Messen der Winkelposition aufweist, der imstande ist, die Winkelposition des Drehtischs (21) mit einem oder mehreren erfassten Bildern zu assoziieren.

10. Inspektionsverfahren für Schmelzöfen (100a), die in der Stahlindustrie verwendet werden können, mittels einer Inspektionsvorrichtung (10) wie in den Ansprüchen 1 bis 9, aufweisend die Schritte:
- Einführen eines Inspektionskopfs (11) in einen Schmelzofen (100a) durch eine Einlassöffnung (101) des Schmelzofens (100a) hindurch mittels eines Positionierungsträgers (12);
- Erfassen von optischen und/oder thermischen Bildern eines Streifens der Umgebung (100) des Schmelzofens (100a), der durch eine oder mehrere Bilderfassungsvorrichtungen (17, 18, 24) eingerahmt werden kann, mittels der Drehung eines Drehtischs (21), der die eine oder die mehreren Bilderfassungsvorrichtungen (17, 18, 24) aufweist, um eine Achse (X) des Drehtischs (21) herum;
- Verarbeiten der erfassten Bilder mittels einer Verarbeitungseinheit (13), wobei der Inspektionskopf (11) aus dem Schmelzofen (100a) innerhalb einer Minute herausgezogen wird, nachdem er in eine heiße Umgebung wie das Innere des Schmelzofens (100a) eingeführt wurde.

11. Inspektionsverfahren nach Anspruch 10, wobei es vorsieht, dass das Einführen des Inspektionskopfs (11) nach dem Schritt des Abstechens des geschmolzenen Metalls durchgeführt wird.

12. Inspektionsverfahren nach irgendeinem Anspruch von 10 oder 11, wobei es vorsieht, dass während der Bilderfassung der Inspektionskopf (11) mittels des Positionierungsträgers (12) in der Höhe stationär gehalten wird.

13. Inspektionsverfahren nach Anspruch 10, wobei es auch vorsieht, den Inspektionskopf (11) um eine Achse (Y) zu drehen, die orthogonal zu der Achse (X) ist, um Bilder eines anderen Streifens der Umgebung (100) zu erfassen.

14. Inspektionsverfahren nach Anspruch 10, wobei es auch vorsieht, den Drehtisch (21) um eine Achse (Y) zu drehen, die orthogonal zu der Achse (X) ist, unabhängig von dem Inspektionskopf (11).

## Revendications

1. Appareil d'inspection (10) pour fours de fusion (100a) utilisables dans l'industrie sidérurgique, comprenant une tête d'inspection (11) et un support de positionnement (12), ladite tête d'inspection (11) comprenant une table tournante (21), **dans lequel** ladite tête d'inspection (11) comprend un ou plusieurs dispositifs de détection d'images (17, 18, 24) fixés sur ladite table tournante (21) et qui sont agencés pour tourner de manière solidaire de celle-ci, dans lequel ledit support de positionnement (12) est apte à l'insertion de la tête d'inspection (11) dans ledit four de fusion (100a) à travers une ouverture d'entrée (101) du four de fusion (100a), dans lequel ledit support de positionnement (12) est un bras articulé robotisé et dans lequel ladite tête d'inspection (11) comprend une plateforme (15) présentant la table tournante (21) et dans lequel ladite tête d'inspection (11) comprend en outre un corps (16), dans lequel ledit corps (16) est lié au support de positionnement (12) et supporte à son tour la plateforme (15), dans lequel lesdits un ou plusieurs dispositifs de détection d'images (17, 18, 24) sont mobiles en rotation autour d'un axe (X) de la plateforme (15) ou, de manière équivalente, de l'axe (X) de la table tournante (21), dans lequel l'appareil comprend au moins un capteur de température (19) et un système de traitement de données (37) apte à acquérir des données provenant dudit au moins un capteur de température (19), afin d'activer des procédures de protection de la tête d'inspection (11), et dans lequel l'appareil comprend en outre un système de chauffage ou de refroidissement, à air ou à eau, pour réguler la température autour de la tête d'inspection (11).

2. Appareil d'inspection selon la revendication 1, dans lequel lesdits un ou plusieurs dispositifs de détection d'images (17, 18, 24) présentent une inclinaison par rapport à la plateforme (15).

3. Appareil d'inspection (10) selon l'une quelconque des revendications précédentes, dans lequel lesdits un ou plusieurs dispositifs de détection d'images (17, 18, 24) sont positionnés sur ladite table tournante (21) de manière à avoir leurs optiques (17a, 18a, 24a) en correspondance avec une paroi latérale (11a) de la tête d'inspection (11).

4. Appareil d'inspection (10) selon l'une quelconque des revendications précédentes, dans lequel lesdits un ou plusieurs dispositifs de détection d'images (17, 18, 24) présentent une ouverture de vision (δ) sur un plan vertical (PV) comprise entre 30° et 95°, de préférence 60°.

5. Appareil d'inspection (10) selon l'une quelconque des revendications précédentes, dans lequel lesdits un ou plusieurs dispositifs de détection d'images (17, 18, 24) présentent une ouverture de vision (γ) sur un plan horizontal (PO) comprise entre 30° et 95°, de préférence 60°.

6. Appareil d'inspection (10) selon l'une quelconque des revendications précédentes, dans lequel lesdits un ou plusieurs dispositifs de détection d'images (17, 18, 24) sont choisis parmi des dispositifs de détection d'images optiques et/ou thermiques et/ou des dispositifs qui détectent aussi bien des images optiques que des images thermiques.

7. Appareil d'inspection (10) selon l'une quelconque des revendications précédentes, dans lequel ledit axe (X) est un axe sensiblement vertical, avec une inclinaison dudit axe (X) par rapport à la verticale, inférieure ou égale à 0.5°.

8. Appareil d'inspection (10) selon l'une quelconque des revendications précédentes, dans lequel une inclinaison dudit axe (X) varie de -35° à +35°.

9. Appareil d'inspection (10) selon l'une quelconque des revendications précédentes, dans lequel ladite table tournante (21) comprend un capteur (44) pour mesurer la position angulaire, apte à associer la position angulaire de ladite table tournante (21) à une ou plusieurs images acquises.

10. Procédé d'inspection pour fours de fusion (100a) utilisables dans l'industrie sidérurgique, au moyen d'un appareil d'inspection (10) selon les revendications 1 à 9, comprenant les étapes consistant à :
- insérer une tête d'inspection (11) dans un four de fusion (100a) à travers une ouverture d'entrée (101) du four de fusion (100a), au moyen d'un support de positionnement (12) ;
- acquérir des images optiques et/ou thermiques d'une bande de l'environnement (100) du four de fusion (100a) pouvant être cadrée par un ou plusieurs dispositifs de détection d'images (17, 18, 24), au moyen de la rotation d'une table tournante (21) comprenant lesdits un ou plusieurs dispositifs de détection d'images (17, 18, 24), autour d'un axe (X) de ladite table tournante (21) ;
- traiter les images acquises, au moyen d'une unité de traitement (13), dans lequel la tête d'inspection (11) est extraite du four de fusion (100a) dans la minute qui suit son insertion dans un environnement chaud tel que l'intérieur du four de fusion (100a).

11. Procédé d'inspection selon la revendication 10, dans lequel il est prévu que l'insertion de la tête d'inspection (11) soit effectuée après l'étape de coulée du métal en fusion.

12. Procédé d'inspection selon l'une quelconque des revendications 10 ou 11, dans lequel il est prévu que, pendant ladite acquisition d'images, la tête d'inspection (11) soit maintenue immobile en hauteur par le support de positionnement (12).

13. Procédé d'inspection selon la revendication 10, dans lequel il est également prévu de faire tourner la tête d'inspection (11) autour d'un axe (Y) orthogonal audit axe (X) afin d'acquérir des images d'une autre bande de l'environnement (100).

14. Procédé d'inspection selon la revendication 10, dans lequel il est également prévu de faire tourner ladite table tournante (21) autour d'un axe (Y) orthogonal audit axe (X), indépendamment de la tête d'inspection (11).
